# EUROPEAN PATENT SPECIFICATION

(11) **EP 3 130 624 B1**
(45) Date of publication and mention of the grant of the patent: **26.12.2018**
(21) Application number: 15776375.6
(22) Date of filing: 01.04.2015
(51) Int. Cl.: C09J 7/00, B32B 27/00, B32B 27/30, C09J 4/02, C09J 11/06, C09J 181/00, B32B 25/04, B32B 27/40, C08G 18/67, C08G 18/38, C08G 75/045, C09J 175/16, B05D 3/06, B05D 7/24, B32B 25/12, C08G 75/04, C09J 181/02, C09J 201/02, C09J 5/06, B32B 37/12

(54) **COMPOSITION, ADHESIVE SHEET MANUFACTURING METHOD, ADHESIVE SHEET, LAMINATE MANUFACTURING METHOD, AND LAMINATE**
ZUSAMMENSETZUNG, HAFTFOLIENHERSTELLUNGSVERFAHREN, HAFTFOLIE, LAMINATHERSTELLUNGSVERFAHREN UND LAMINAT
COMPOSITION, PROCÉDÉ DE FABRICATION D'UNE FEUILLE ADHÉSIVE, FEUILLE ADHÉSIVE, PROCÉDÉ DE FABRICATION D'UN CORPS STRATIFIÉ ET CORPS STRATIFIÉ

(30) Priority: 07.04.2014 JP 2014078904
(43) Date of publication of application: 15.02.2017
(73) Proprietor: Bridgestone Corporation, Tokyo 104-8340 (JP)
(72) Inventor: KITANO, Hajime, Tokyo 104-8340 (JP)
(74) Representative: Oxley, Robin John George
(86) International application number: PCT/JP2015/060382
(87) International publication number: WO 2015/156193

(56) References cited:
- WO-A1-2014/109217
- JP-A- H10 292 045
- JP-A- S57 105 472
- JP-A- 2002 500 784
- JP-A- 2003 238 904
- JP-A- 2011 508 814
- JP-A- 2012 218 170
- US-A1- 2005 119 366
- US-A1- 2005 245 711

## Description

### Technical Field

The present invention relates to a composition, a manufacturing method of an adhesive sheet, an adhesive sheet, a manufacturing method of a layered body, and a layered body, and more specifically relates to a composition that is suitable for adhesion to rubber, a manufacturing method of an adhesive sheet, and an adhesive sheet, as well as a manufacturing method of a layered body in which a rubber layer is adhered using the adhesive sheet, and a layered body.

### Background Art

Although materials exhibiting excellent adhesive power to vulcanized rubber have thus far been desired, there has not been a material which provides sufficient adhesion power to vulcanized rubber. Methods employed for adhering vulcanized rubber are disclosed, for example, in Japanese Patent Application Laid-open (JP-A) No. H10-139901. In the method disclosed in JP-A No. H10-139901, vulcanized rubber is surface-treated, and another member is adhered to the surface-treated face using an adhesive. Reference is also made to US 2005/119366 which discloses thiolene-curing adhesive formulations and US 2005/245711 which discloses self-photoinitiating water-dispersible acrylate ionomers.

### SUMMARY

With regard to the adhesion of vulcanized rubber, although vulcanized rubber may be adhered to another member via a polyurethane-based adhesive via the method disclosed in JP-A No. H10-139901, there is still room for improvement in the adhesive power.

In view of the above circumstances, the present disclosure aims to provide a composition which can provide an adhesive sheet which can exhibit a high adhesive power to rubber, an adhesive sheet which includes the composition and a manufacturing method of the adhesive sheet, and a layered body resulted by using the adhesion sheet and a manufacturing method of the layered body.

### Solution to Problem

In view of achieving the object, according to an aspect of the present invention, a composition that includes a polythiol compound, a compound having a carbon-carbon double bond at a terminal of a molecule thereof, a photoradical generator, and a thermal radical generator, in which the ratio (Ene/SH) of the total molar number (Ene) of carbon-carbon double bond contained in terminals of a molecule of the compound having a carbon-carbon double bond at a terminal of a molecule thereof, a photoradical generator to the total molar number (SH) of thiol groups contained in the polythiol compound is higher than 0.20 but equal to or less than 0.70, is provided.

### Effect of Invention

According to an aspect of the invention, a composition which can provide an adhesive sheet which can exhibit a high adhesive power to rubber, an adhesive sheet which includes the composition and a manufacturing method of the adhesive sheet, and a layered body resulted by using the adhesion sheet and a manufacturing method of the layered body can be provided.

### DETAILED DESCRIPTION

### Composition

The composition according to one embodiment of the present invention is a compound including: a polythiol compound(, which may be hereinafter referred to as a polythiol compound (A)); a compound having a carbon-carbon double bond at a terminal of a molecule thereof(, which may be hereinafter referred to as a compound (B) having a carbon-carbon double bond at a terminal of a molecule thereof); a photoradical generator(, which may be hereinafter referred to as a photoradical generator (C)); and a thermal radical generator(, which may be hereinafter referred to as a thermal radical generator (D)), in which a ratio (Ene/SH) of a total molar number (Ene) of the carbon-carbon double bond contained in terminals of a molecule of the compound (B) having a carbon-carbon double bond at a terminal of a molecule thereof to a total molar number (SH) of thiol groups contained in the polythiol compound (A) is higher than 0.20 but equal to or less than 0.70.

Throughout the present specification, "SH" indicates a total molar number of thiol groups contained in the polythiol compound (A), and "Ene" indicates a total molar number of carbon-carbon double bond contained in terminals of a molecule of the compound (B) having a carbon-carbon double bond at a terminal of a molecule thereof. A "ratio (Ene/SH)" indicates a ratio of the total molar number (Ene) of the carbon-carbon double bond contained in terminals of a molecule of the compound (B) having a carbon-carbon double bond at a terminal of a molecule thereof to the total molar number (SH) of thiol groups contained in the polythiol compound (A). Namely, the ratio (Ene/SH) is a value resulted by dividing Ene by SH.

Throughout the present specification, the polythiol compound (A), the compound (B) having a carbon-carbon double bond at a terminal of a molecule thereof, the photoradical generator (C), the thermal radical generator (D), and the after-mentioned surface adjustor (E) are also referred to as "component (A)", "component (B)", "component (C)", "component (D)", and "component (E)", respectively, in some cases.

In one embodiment, the composition is able to provide an adhesive sheet which exhibits a high adhesive power to, particularly, rubber. Further, the composition is able to provide an adhesive sheet which exhibits a high adhesive power to vulcanized rubber as well as to unvulcanized rubber.

Specifically, for example, an adhesive composition layer is formed by applying the composition onto a support to form a coating film of the composition and irradiating the coating film with light, thereby obtaining an adhesive sheet which has the adhesive composition layer. The adhesive sheet (specifically, the adhesive composition layer included in the adhesive sheet) can exhibit a high adhesive power to vulcanized rubber as well as to unvulcanized rubber.

Although the reason therefor is not clear, it is presumed that the following may be the reason.

When light is radiated onto the composition, the photoradical generator (C) contained in the composition is activated by light energy, and acts on some of the thiol groups contained in the polythiol compound (A), to generate thiyl radicals. Then the component (A) and the component (B) react together by these thiyl radicals reacting with the carbon-carbon double bonds at the terminal ends in the component (B). The composition containing components (A) to (D) is thereby cured by such a thiol-ene reaction so as to form an adhesive composition layer.

In order to adhere the adhesive composition layer, of the adhesive sheet obtained by employing the composition, to rubber, some of the other thiol groups derived from the polythiol compound (A) in the adhesive composition layer are radicalized by the action of the thermal radical generator (D) activated by thermal energy so as to generate thiyl radicals. The thiyl radicals then react with the carbon-carbon double bonds present in the rubber layer, and form an adhesion layer.

It is thought that the adhesion layer formed in this manner achieves a high interfacial adhesive strength (interfacial adhesive strength at the interface between the rubber layer and the adhesion layer) due to a high film strength given by the photo-curing reaction of the component (A) and the component (B), and also due to the chemical bonding between the thiol groups derived from the component (A) and the rubber layer. This is thought to be the reason why an adhesion layer having a high adhesive strength to rubber (the rubber layer) can be formed using the adhesive sheet obtained by employing the composition.

It is thought that the adhesive sheet obtained by using the composition can exhibit a high adhesive power to not only to unvulcanized rubber but also, in particular, vulcanized rubber since a carbon-carbon double bond resides in unvulcanized rubber as well as vulcanized rubber. Reference below simply to "adhesive power" means an overall adhesive force arising from both the interfacial adhesive power and the film strength.

Further, it is also conceivable that chemical bonding between a sulfur atom in a thiol group in the polythiol compound (A) and a carbon atom in a carbon-carbon bond occurs as a result of a hydrogen abstraction reaction from the main chain formed by carbon-carbon bonds present in the rubber. Therefore, the composition according to the present invention is able to exhibit adhesive power to rubber even when carbon-carbon double bonds are not necessarily present in the rubber.

Use of the adhesive sheet formed by using the composition enables sufficiently high adhesive power to be exhibited with respect to rubbers in general, even in the case where surface roughening treatment, such as grinding, is not carried out on the surfaces of the adhesion faces of the rubbers, conceivably because the adhesive composition layer in the adhesive sheet and the rubber chemically bind to each other as described above. Omitting a surface roughening treatment on the adhesion face of the rubber, as described above, provides for simplification and improved efficiency of an adhesion process.

Since the adhesive sheet formed by using the composition according to the present invention is able to exhibit high adhesive power to vulcanized rubber, adhesion of vulcanized rubber materials using the adhesive sheet can be achieved at a remarkably lower temperature and over a remarkably shorter length of time (for example, from 100 to 150°C for from 3 to 30 minutes) than when unvulcanized rubber materials are brought into contact with each other and adhesion is performed while vulcanizing them.

The composition also contains the photoradical generator (C), and the adhesive sheet is obtained by irradiation with light. This enables, for example, the composition to have a formulation (a combination of types and contents of compounds employed as the components (A) to (D)) that does not readily cure even if it is in storage environments (for example, in an environment in atmosphere at room temperature of 25°C and 1 atm pressure). Giving the composition a formulation that does not readily cure in storage environments such as those described above results in excellent storage stability of the composition, compared to, for example, a composition that does not contain a photoradical generator, and that is a type of composition that produces an adhesive sheet when the composition is applied as a film and left for a long period of time in an environment in atmosphere at room temperature. Detailed explanation follows regarding each component of the composition according to an embodiment of the invention.

### <Polythiol Compound (A)>

In the present invention, the term "polythiol compound" refers to a compound having two or more thiol groups in one molecule thereof. As the component (A), one polythiol compound may be used singly, or two or more polythiol compounds may be used in combination.

In the polythiol compound (A), the number of thiol groups in one molecule thereof is not particularly limited as long as the above-defined relationship with the total molar number of (meth)acryloyl groups in the component (B) is satisfied. From the viewpoint of improving the adhesive power, the polythiol compound (A) preferably has three or more thiol groups in one molecule thereof. The upper limit of the number of thiol groups in one molecule of the polythiol compound (A) is not particularly limited, and may be selected, as appropriate, as long as the effects according to the present invention are not impaired. The number of thiol groups in one molecule may usually be within the range of from 2 to 7, preferably within the range of from 3 to 6, and more preferably within the range of from 3 to 4, although the number may vary depending on whether the polythiol compound (A) is a low-molecular-weight compound or a high-molecular-weight compound. However, these ranges should not be construed as limiting the scope of the present invention.

The scope of the polythiol compound (A) encompasses primary thiols, secondary thiols, and tertiary thiols. Primary thiols are preferable from the viewpoint of improving the adhesive power.

The molecular weight of the polythiol compound (A) is preferably 3000 or less, more preferably 2000 or less, still more preferably 1000 or less, further more preferably 900 or less, and particularly preferably 800 or less, from the viewpoint of improving the adhesive power. Further, the lower limit of the molecular weight of the polythiol compound (A) is not particularly limited. The lower limit of the molecular weight of the polythiol compound (A) is preferably 200 or more, and still more preferably 300 or more. When the polythiol compound (A) is a polymer, the "molecular weight" refers to the styrene-equivalent number average molecular weight.

Examples of the polythiol compound (A) include an aliphatic polythiol that may include a heteroatom and an aromatic polythiol that may include a heteroatom. An aliphatic polythiol that may include a heteroatom is preferable from the viewpoint of improving the adhesive power.

The "aliphatic polythiol that may include a heteroatom" refers to an aliphatic compound that has two or more thiol groups in one molecule thereof and that may include a heteroatom. The "aromatic polythiol that may include a heteroatom" refers to an aromatic compound that has two or more thiol groups in one molecule thereof and that may include a heteroatom.

From the viewpoint of improving the adhesive power, the included heteroatom, or heteroatoms, is preferably at least one kind selected from the group consisting of oxygen, nitrogen, sulfur, phosphorus, halogen, and silicon; is more preferably at least one kind selected from the group consisting of oxygen, nitrogen, sulfur, phosphorus, and halogen; and is particularly preferably at least one kind selected from the group consisting of oxygen, nitrogen, and sulfur.

### (Aliphatic Polythiol That May Include Heteroatom)

Examples of the aliphatic polythiol that may include a heteroatom include: a polythiol in which a portion other than the thiol groups is an aliphatic hydrocarbon, such as an alkanedithiol having from 2 to 20 carbon atoms; a polythiol obtainable by replacing halogen atoms of a halohydrin adduct of an alcohol with thiol groups; a polythiol that is a hydrogen sulfide reaction product of a polyepoxide compound; a thioglycolic acid ester obtainable by an ester-forming reaction between a polyhydric alcohol having from 2 to 6 hydroxyl groups in a molecule thereof and thioglycolic acid; a mercapto fatty acid ester obtainable by an ester-forming reaction between a polyhydric alcohol having from 2 to 6 hydroxyl groups in a molecule thereof and a mercapto fatty acid; a thiol isocyanurate compound obtainable by a reaction between an isocyanurate compound and a thiol; a thiol that includes a polysulfide group; a silicone modified with thiol groups; and silsesquioxane modified with thiol groups.

Examples of the polyhydric alcohol having from 2 to 6 hydroxyl groups in a molecule thereof include an alkanediol having from 2 to 20 carbon atoms, a poly(oxyalkylene)glycol, glycerol, diglycerol, trimethylolpropane, ditrimethylolpropane, pentaerythritol, and dipentaerythritol.

Among the above-exemplified aliphatic polythiols that may include a heteroatom, from the viewpoint of improving the adhesive power, a polythiol in which a portion other than the thiol groups is an aliphatic hydrocarbon, a polythiol obtainable by replacing halogen atoms of a halohydrin adduct of an alcohol with thiol groups, a polythiol that is a hydrogen sulfide reaction product of a polyepoxide compound, a thioglycolic acid ester, a mercapto fatty acid ester, and a thiol isocyanurate compound are preferable; a mercapto fatty acid ester and a thiol isocyanurate compound are more preferable; and a mercapto fatty acid ester is particularly preferable. From similar viewpoints, a thiol that does not include a polysulfide group or a siloxane bond is also preferable.

### (Polythiol in which a portion other than Thiol Groups is Aliphatic Hydrocarbon)

The polythiol in which a portion other than thiol groups is an aliphatic hydrocarbon is, for example, an alkanedithiol having from 2 to 20 carbon atoms.

Examples of the alkanedithiol having from 2 to 20 carbon atoms include 1,2-ethanedithiol, 1,1-propanedithiol, 1,2-propanedithiol, 1,3-propanedithiol, , 2,2-propanedithiol, 1,4-butanedithiol, 2,3-butanedithiol, 1,5-pentanedithiol, 1,6-hexanedithiol, 1,8-octanedithiol, 1,10-decanedithiol, 1-1-cyclohexanedithiol, and 1,2-cyclohexanedithiol.

### (Thioglycolic Acid Ester)

Examples of the thioglycolic acid ester include 1,4-butanediol bisthioglycolate, 1,6-hexanediol bisthioglycolate, trimethylolpropane tristhioglycolate, and pentaerythritol tetrakisthioglycolate.

### (Mercapto Fatty Acid Ester)

The mercapto fatty acid ester is preferably a β-mercapto fatty acid ester having a primary thiol group, and is more preferably a β-mercaptopropionic acid ester of a polyhydric alcohol having from 2 to 6 hydroxyl groups in a molecule thereof, from the viewpoint of improving the adhesive power. Further, the mercapto fatty acid ester having a primary thiol group preferably has from 4 to 6 thiol groups in one molecule thereof, more preferably has 4 or 5 thiol groups in one molecule thereof, and further preferably has 4 thiol groups in one molecule thereof, from the viewpoint of improving the adhesive power.

Preferable examples of the β-mercaptopropionic acid ester having a primary thiol group include tetraethyleneglycol bis(3-mercaptopropionate) (EGMP-4), trimethylolpropane tris(3-mercaptopropionate) (TMMP), pentaerythritol tetrakis(3-mercaptopropionate) (PEMP), and dipentaerythritol hexakis(3-mercaptopropionate) (DPMP). Among these, PEMP and DPMP are preferable, and PEMP is more preferable.

The β-mercaptopropionic acid ester having a secondary thiol group is, for example, an ester between a polyhydric alcohol having from 2 to 6 hydroxyl groups in a molecule thereof and β-mercaptobutanoic acid, and specific examples thereof include 1,4-bis(3-mercaptobutylyloxy)butane and pentaerythritol tetrakis(3-mercaptobutyrate).

### (Thiol Isocyanurate Compound)

The thiol isocyanurate compound, which is obtainable via a reaction between an isocyanurate compound and a thiol, is preferably a thiol isocyanurate compound having a primary thiol group, from the viewpoint of improving the adhesive power. Further, the thiol isocyanurate compound having a primary thiol group preferably has 2 to 4 thiol groups in one molecule thereof, and more preferably has 3 thiol groups in one molecule thereof, from the viewpoint of improving the adhesive power.

The thiol isocynaurate compound having a primary thiol group is preferably tris-[(3-mercaptopropionyloxy)-ethyl]-isocyanurate (TEMPIC).

### (Silicone Modified with Thiol Group)

Examples of the silicone modified with thiol groups include mercapto-modified silicone oils such as KF-2001, KF-2004, and X-22-167B (tradenames, manufactured by Shin-etsu Chemical Co., Ltd.), SMS042 and SMS022 (tradenames, manufactured by Gelest Inc.), and PS849 and PS850 (tradenames, manufactured by UCT Inc.).

### (Aromatic Polythiol That May Include Heteroatom)

Examples of aromatic polythiols that may be used as the polythiol compound (A) include the aromatic polythiols listed below. As described above, the aromatic polythiol may include a heteroatom. Specifically, examples of the aromatic polythiols include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane.

### <Compound (B) having a carbon-carbon double bond at a terminal of a molecule thereof>

In the present invention, the compound having a carbon-carbon double bond at a terminal of a molecule thereof is a compound in which a carbon atom which resides at a terminal of a molecule of the compound forms a double bond together with another carbon atom.

In cases in which the molecule is a branched molecule (namely, cases in which there are both a main chain and a side chain present in the molecule), the terminal of the molecule may be a terminal end of the main chain or a terminal end of a side chain.

Hereinafter, the carbon-carbon double bond present at the terminal of a molecule of the component (B) is sometimes called a "terminal double bond".

Functional groups containing a terminal double bond are selected from the group consisting of an acryloyloxy group and a methacryloyloxy group. The component (B) may be a compound containing one kind of the functional group alone, or a compound containing two or more kinds thereof.

Namely, the component (B) contains, at a terminal of its molecule, at least one or more kind of functional group containing a carbon-carbon double bond.

There are 3 terminal double bonds in each molecule of the component (B).

Namely, due to compounds containing an acryloyloxy group having a high reactivity and readily polymerizing when irradiated with light, an acryloyloxy group-containing compound may be suitably employed as the component (B) even if it has only a single acryloyloxy group. On the other hand, due to compounds not containing an acryloyloxy group having lower reactivity than compounds containing an acryloyloxy group, a compound not containing an acryloyloxy group is suitably employed as the component (B) in a compound in which the number of terminal double bonds in each molecule is 3.

Note that a single compound including a carbon-carbon double bond at a terminal of a molecule thereof may be employed alone as the component (B), or a combination of two or more kinds of compounds that respectively include a carbon-carbon double bond at a terminal of a molecule thereof may be employed as the component (B).

The component (B) is preferably a compound having a methacryloyloxy group, is more preferably a compound having two or more methacryloyloxy groups, is still more preferably a compound having three methacryloyloxy groups, as the functional group containing a terminal double bond.

Employing a composition containing a compound having a methacryloyloxy group as the component (B) enables an adhesive sheet to be obtained that includes an adhesive composition layer having high adhesion heat resistance (does not readily peel off at high temperatures) after adhering to a rubber layer. The reason for this is not definitively determined; however, when a compound including a methacryloyloxy group is employed, an adhesive composition layer is formed with a high glass transition temperature (hereinafter sometimes referred to as "Tg") compared to cases in which the compound having another functional group containing a terminal double bond instead of the methacryloyloxy group (for example, an acryloyloxy group) is employed therefor. It is thought that high adhesion heat resistance is obtained due to this.

Compounds having a methacryloyloxy group have lower reactivity with the component (A) at room temperature (for example, 25°C) than, for example, compounds having an acryloyloxy group or the like, and hence the storage stability is raised for a composition containing a compound having a methacryloyloxy group as the component (B).

As stated above, the composition contains the component (C), and so there is no need to cure the composition in an environment in atmosphere at room temperature. Thus, as described above, employing a compound having a methacryloyloxy group which does not readily react with the component (A) at room temperature as the component (B) enables an adhesive
sheet having both high adhesiveness and high adhesion heat resistance to be obtained, as well as enabling the storage stability of the composition to be raised.

A compound that further includes an aromatic ring in the molecule, in addition to the functional group containing a terminal double bond, is employed as the component (B).

Employing a composition that contains a compound having an aromatic ring as the component (B) enables an adhesive sheet to be obtained that includes an adhesive composition layer having high adhesion heat resistance after adhering to a rubber layer. Although the reason for this has not been definitively determined, it is thought that when a compound having an aromatic ring is employed as the component (B), a high adhesion heat resistance can be obtained due to forming the adhesive composition layer with higher Tg than cases employing a compound not having an aromatic ring.

The aromatic ring includes unsaturated ring in which carbons having π electrons are arranged in a ring structure.

The number of rings forming the aromatic ring and contained in one molecule of the component (B) is 3.

A compound further including an isocyanurate ring in the molecule in addition to the functional group containing a terminal double bond is employed as the component (B).

An adhesive sheet having high adhesion heat resistance is also obtained in cases in which a composition containing a compound having an isocyanurate ring as the component (B) is employed. Although the reason for this has not been definitively determined, similarly to as described above, it is thought that this is because an adhesive composition layer with a high Tg is formed due to employing a compound having an isocyanurate ring as the component (B).

There is one isocyanurate ring in each molecule.

Out of compounds having an isocyanurate ring, from the perspective of adhesion heat resistance, a compound that further includes at least one kind of aromatic ring is employed, in addition to the functional group containing a terminal double bond and the isocyanurate ring. The compound having at least one kind of aromatic ring has three single aromatic rings.

The total number of rings in the compound having the functional group containing a terminal double bond, the isocyanurate ring, and the aromatic rings is 4.

The isocyanurate ring is also added to the "number of rings" described above.

When the component (B) is a high molecular weight compound, the number average molecular weight of the component (B) is, for example, 50000 or less, is preferably 40000 or less, and is more preferably 35000 or less, from the perspective of improving the adhesive strength. There is no particular limitation to the lower limit for the number average molecular weight of the component (B); however, the lower limit is, for example, 2000 or greater.

A compound having a nitrogen atom as well as the functional group containing a terminal double bond is also employed as the component (B). The nitrogen atom is an atom included in an isocyanurate ring. From the perspective of achieving both adhesiveness and adhesion heat resistance, the component (B) is a compound including both an isocyanurate ring and a urethane bond.

Examples of a compound having a urethane bond in addition to a functional group containing a terminal double bond include a urethane compound obtained by reacting a compound having one or more functional group containing a terminal double bond and a single hydroxy group in the molecule (hereinafter sometimes referred to as "hydroxy-group-containing-ene compound") with at least one organic isocyanate compound.

The urethane compound may be a compound obtained by reacting a hydroxy-group-containing-ene compound, and, optionally at least one diol selected from the group consisting of alkanediols, polyether diols, polybutadiene diols, polyester diols, polycarbonate diols, and amide diols, with an organic isocyanate compound.

A known method may be employed as the method to obtain a urethane compound by reacting a hydroxy-group-containing-ene compound with an organic isocyanate compound.

In cases in which the urethane compound is an acylate, examples of the hydroxy-group-containing-ene compound include a hydroxy-group-containing acrylate corresponding to the hydroxy-group-containing methacrylate.

Out of compounds containing a urethane bond, from the perspective of obtaining an adhesion layer having a high adhesion heat resistance and high film strength, a compound that further includes aromatic rings in addition to the functional group containing a terminal double bond and the urethane bond is employed.

Specific examples of the compound having the functional group containing a terminal double bond and at least one isocyanurate ring or urethane bond include, but are not limited to, the compounds represented by the following Structural Formulae (2) to (10). Structural Formulae (2) to (8) are provided for reference purposes only.

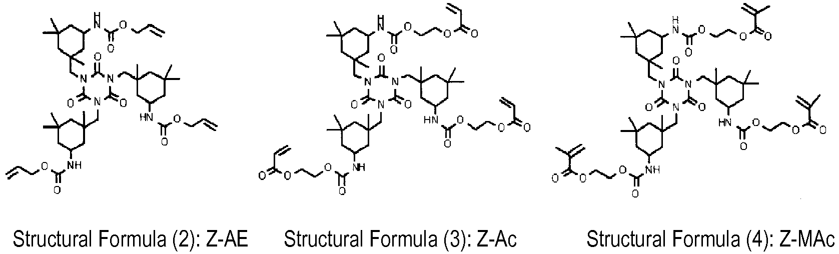

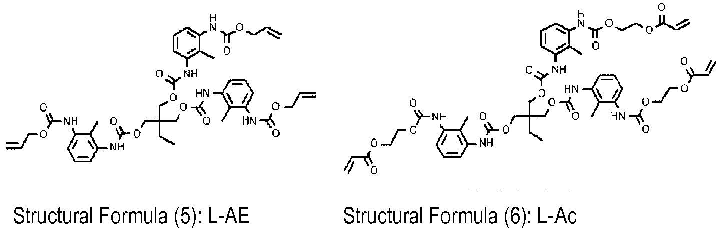

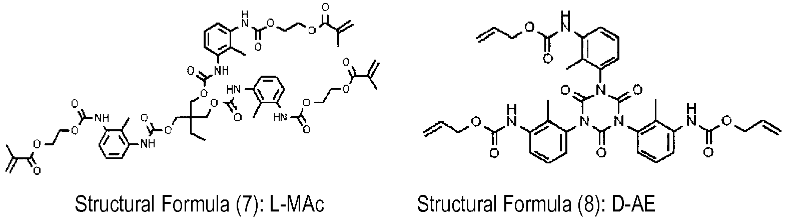

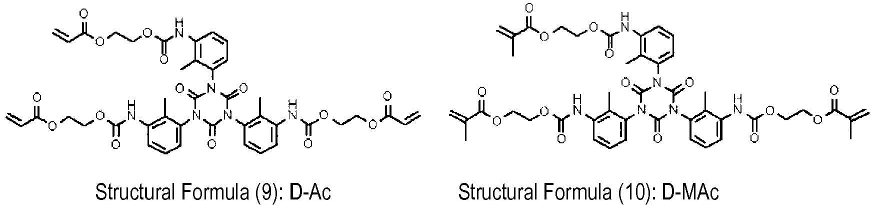

From the perspective of adhesion heat resistance, a compound that has both an aromatic ring and an isocyanurate ring is employed as the component (B). Among such compounds, a compound having a urethane bond as a linking group linking the aromatic ring and the functional group containing a terminal double bond together is employed therefor. As the component (B), the compounds represented by the following Formula (1) are used.

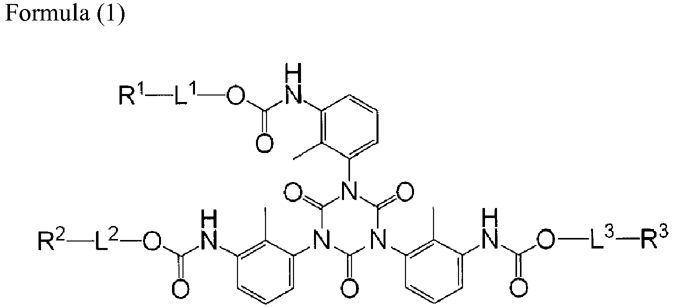

In Formula (1), R¹, R², and R³ each independently represent an acryloyloxy group or a methacryloyloxy group, in which at least one of R¹ to R³ is a methacryloyloxy group. L¹, L², and L³ each independently represent an alkylene group having from 1 to 4 carbons.

At least one of R¹ to R³ in Formula (1) is a methacryloyloxy group. From the perspective of adhesion heat resistance, preferably all of R¹ to R³ are methacryloyloxy groups.

The L¹ to L³ in Formula (1) preferably have a small number of carbons, and more preferably are alkylene groups having from 1 to 2 carbons, from the perspective of adhesion heat resistance.

The component (B) is a compound represented by the Formula (1).

### Photoradical Generator (C)

The photoradical generator is a compound that generates radicals on application of light energy, and more specifically is a compound that, after being activated by irradiation with light, acts on the thiol groups of the polythiol compound (A) to generate thiyl radicals.

The photoradical generator (C) may employ one kind of radical generator alone, or may employ a combination of two or more kinds thereof.

Known photoradical generators may widely be used as the photoradical generator (C), and may be selected in accordance with a wavelength of light used for the irradiating, without particular limitations.

The photoradical generator (C) is preferably one that is stable (non-activated) at room temperature from the viewpoint of storage stability of the composition.

The photoradical generator (C) is, for example, an intramolecular fission-type photoradical generator, and examples thereof include: benzoin alkyl ether-based photoradical generators such as benzoin ethyl ether, benzoin isobutyl ether, and benzoin isopropyl ether; acetophenone-based photoradical generators such as 2,2-diethoxyacetophenone and 4'-phenoxy-2,2-dichloroacetophenone; propiophenone-based photoradical generators such as 2-hydroxy-2-methylpropiophenone, 4'-isopropyl-2-hydroxy-2-methylpropiophenone, and 4'-dodecyl-2-hydroxy-2-methylpropiophenone; benzil dimethyl ketal; 1-hydroxycyclohexyl phenyl ketone; anthraquinone-based photoradical generators such as 2-ethylanthraquinone and 2-chloroanthraquinone; and acylphosphine oxide-based photoradical generators such as 2,4,6-trimethylbenzoyl-diphenyl-phosphineoxide and bis(2,4,6-trimethylbenzoyl)-phenylphosphineoxide.

Further examples include hydrogen abstraction-type photoradical generators such as benzophenone/amine-based photoradical generators, Michiller's ketone/benzophenone-based photoradical generators, and thioxanthone/amine-based photoradical generators. Non-extractable photoradical generators are also usable for avoiding migration of unreacted portion of photoradical generator. Examples thereof include the polymerized form of an acetophenone-based radical generator and a substance obtainable by adding a double bond of an acryl group to benzophenone.

From the viewpoint of using commercially-available light irradiation means emitting light in a longer wavelength region among the UV region (such as UV-LED), acylphosphine oxide-based photoradical generators, the absorption wavelength region of which ranges to the relatively longer wavelength side, is preferable as the photoradical generator (C).

### Thermal radical generator (D)

The thermal radical generator is a compound that generates a radical on application of thermal energy, and more specifically is a compound that, after being activated by heat, acts on the thiol groups of the polythiol compound (A) to generate thiyl radicals.

By employing the thermal radical generator (D), an adhesive sheet is obtained having a higher adhesive strength than cases in which, for example, only the photoradical generator (C) is employed as the radical generator, and there is also the advantage of enabling the adhesive sheet to be adhered to rubber that does not transmit light.

Note that the thermal radical generator (D) preferably has a low reactivity to light (specifically, is not liable to be activated by light irradiation of the composition during the production processes of the adhesive sheet) from the perspective of obtaining an adhesive sheet having a high adhesive strength.

The thermal radical generator (D) is preferably a thermal radical generator including a peroxide. Examples of the thermal radical generators including a peroxide include thermal radical generators including an organic peroxide and thermal radical generators including an inorganic peroxide. Thermal radical generators including an organic peroxide are preferable.

One thermal radical generator may be used singly as the thermal radical generator (D), or two or more thermal radical generators may be used in combination as the thermal radical generator (D).

The thermal radical generator(s) including an organic peroxide to be used is, for example, at least one selected from the group consisting of t-butyl peroxy-2-ethylhexanoate, dilauroyl peroxide, 1,1,3,3-tetramethylbutyl peroxy-2-ethylhexanoate, 1,1-di(t-hexylperoxy)cyclohexanone, di-t-butyl peroxide, t-butyl cumyl peroxide, 1,1-di(t-hexylperoxy)-3,3,5-trimethylcyclohexane, t-amyl peroxy-2-ethylhexanoate, di(2-t-butylperoxyisopropyl)benzene, di(t-butyl) peroxide, peroxybenzoyl 1,1'-di(2-t-butylperoxyisopropyl)benzene, peroxybenzoyl, 1,1-di(t-butylperoxy)cyclohexane, di(3,5,5-trimethylhexanoyl)peroxide, t-butyl peroxyneodecanoate, t-hexyl peroxyneodecanoate, and dicumyl peroxide. Among these, the thermal radical generator(s) including an organic peroxide is preferably at least one selected from the group consisting of t-butyl peroxy-2-ethylhexanoate, dilauroyl peroxide, 1,1,3,3-tetramethylbutyl peroxy-2-ethylhexanoate, 1,1-di(t-hexylperoxy)cyclohexanone, di-t-butyl peroxide and t-butyl cumyl peroxide. One thermal radical generator including an organic peroxide may be used, or two or more thermal radical generators each including an organic peroxide may be used in combination.

The thermal radical generator including an inorganic peroxide is, for example, a redox radical generator composed of a combination of an oxidant and a reductant, such as a combination of a hydrogen peroxide and an iron (II) salt or a combination of a persulfuric acid salt and sodium hydrogen sulfite. One thermal radical generator including an inorganic peroxide may be used singly, or two or more thermal radical generators each including an inorganic peroxide may be used in combination.

### «Optional Components»

The composition may be prepared such that the composition further includes optional components. Examples of the optional components include surface conditioners, solvents, binders, fillers, pigment dispersants, electric conductivity imparting agents, ultraviolet absorbers, antioxidants, anti-drying agents, penetrants, pH adjusters, metal chelating agents, mildewproof agents, antibacterial agents, surfactants, plasticizers, waxes, and leveling agents.

Although a catalyst which accelerates the reaction between the component (A) and the component (B) may be employed, it is not necessarily to employ the catalyst since an adhesive sheet can be obtained by photo irradiation, as the composition contains the component (C).

### (Surface Controller (E))

The composition may further include a surface controller (hereinafter also referred to as "surface controller (E)"), as necessary. Any surface controller may be used as the surface controller (E). Examples of the surface controller include acrylic surface controllers, vinyl-based surface controllers, silicone-based surface controllers, fluorine-based surface controllers and silicone acrylate-based surface controllers. Among these, silicone acrylate-based surface controllers are preferable from the viewpoints of compatibility and the ability to decrease surface tension.

### (Solvent)

The composition may include a solvent, as necessary. The solvent may be any solvent that does not react with other components, without particular limitation. Examples thereof include aromatic solvents and aliphatic solvents.

Specific examples of the aromatic solvents include toluene and xylene. Examples of the aliphatic solvents include hexane, methyl ethyl ketone (MEK), and butyl acetate.

### <Contents of Individual Components>

The ratio (Ene/SH) of the total molar number (Ene) of the carbon-carbon double bond contained in terminals of a molecule of the compound (B) having a carbon-carbon double bond at a terminal of a molecule thereof to the total molar number (SH) of thiol groups contained in the polythiol compound (A) is higher than 0.20 but equal to or less than 0.70. When the ratio (Ene/SH) is equal to or less than 0.20, the composition may not harden with sufficient tightness, and the adhesive power may decrease. When the ratio (Ene/SH) is higher than 0.70, the amount of thiol groups in the component (A) is small relative to the amount of the terminal double bonds in the component (B), as a result of which the thiol-ene reaction between thiol groups and carbon-carbon double bonds on the rubber surface may not sufficiently proceed, the composition may not tightly adhere to the rubber, and the interfacial adhesive power may decrease. Therefore, the ratio (Ene/SH) is preferably 0.30 or more, and is preferably 0.6 or less. In one embodiment, the lower limit of the ratio (Ene/SH) is 0.30, 0.40, 0.50 or 0.60, and the upper limit of the ratio (Ene/SH) is a value which is larger than the lower limit and is 0.70, 0.60, 0.50, 0.40 or 0.30.

The total molar number (SH) of thiol groups contained in the polythiol compound (A) can be obtained by multiplying the molar number of the polythiol compound (A) by the number of thiol groups contained in one molecule of the polythiol compound (A). In other words, the total molar number (SH) of thiol groups contained in the polythiol compound (A) refers to the total amount of thiol groups contained in the total amount of polythiol compound (A) contained in the composition according to the present invention, and does not refer to the number of thiol groups contained in one molecule of the polythiol compound.

Further, the total molar number (Ene) of the carbon-carbon double bond contained in terminals of a molecule of the compound (B) can be obtained by dividing the weight content of the compound (B) having a carbon-carbon double bond at a terminal of a molecule thereof by the theoretical molecular weight thereof, and multiplying the obtained value by the number of the terminal double bond contained in one molecule of the compound (B) having a carbon-carbon double bond at a terminal of a molecule thereof. In other words, the total molar number (Ene) of the carbon-carbon double bond contained in terminals of a molecule of the compound (B) having a carbon-carbon double bond at a terminal of a molecule thereof refers to the total amount of the terminal double bond contained in the total amount of the compound (B) having a carbon-carbon double bond at a terminal of a molecule thereof contained in the composition, and does not refer to the number of the terminal double bond contained in one molecule of the compound having a carbon-carbon double bond at a terminal of a molecule thereof.

When the total molar number (SH) of thiol groups or the total molar number (Ene) of carbon-carbon double bonds is obtained after the composition has been prepared or after the adhesion layer has been formed, the molecular structures and the contents of the component (A) and the component (B) contained in the composition (the composition before it forms an adhesion layer) may be determined using known measurement methods, such as an NMR measurement or an IR measurement, and then the values of SH and Ac may be obtained using the method described above.

The ratio of the total molar number of the photoradical generator (C) contained in the composition to the total molar number of thiol groups contained in the polythiol compound (A) (photoradical generator (C)/thiol groups) is preferably 0.0001 or higher. When the ratio is 0.025 or higher, the composition is able to exhibit sufficient adhesive power, particularly sufficient film strength of an adhesion layer. From the same viewpoint, the ratio (photoradical generator (C)/thiol groups) is preferably 0.0001 or higher, more preferably 0.0005 or higher, and particularly preferably 0.001 or higher. From the viewpoint of the improvement in strength of the adhesion layer, the ratio (photoradical generator (C)/thiol groups) is preferably 0.05 or lower, more preferably 0.02 or lower, and particularly preferably 0.01 or lower.

The ratio of the total molar number of the heat radical generator (D) contained in the composition to the total molar number of thiol groups contained in the polythiol compound (A) (heat radical generator (D)/thiol groups) is preferably 0.025 or higher. When the ratio is 0.025 or higher, the composition is able to exhibit sufficient adhesive power, particularly interfacial adhesion power. From the same viewpoint, the ratio (heat radical generator (D)/thiol groups) is preferably 0.03 or higher, more preferably 0.035 or higher, and particularly preferably 0.04 or higher. From the viewpoint of the improvement in adhesion power, the ratio (heat radical generator (D)/thiol groups) is preferably 0.80 or lower, more preferably 0.70 or lower, and particularly preferably 0.60 or lower.

As described above, the composition may include optional components (for example, the surface controlling agent (E) or the solvent) in addition to the components (A) to (D). However, from the viewpoint of strongly adhering to rubber, particularly to vulcanized rubber, the total content of the components (A) to (D), excluding solvents, in the composition(, namely, a solid content,) is preferably 80% by mass or higher, more preferably 90% by mass or higher, still more preferably 95% by mass or higher, and further preferably 98% by mass or higher, with respect to the total amount, excluding solvents, of the composition.

From the same viewpoint, the total content of the components (A) to (E), excluding solvents, in the composition is preferably 90% by mass or higher, more preferably 95% by mass or higher, still more preferably 99% by mass or higher, and further preferably 100% by mass, with respect to the total amount, excluding solvents, of the composition.

As described above, the composition is able to provide an adhesive sheet which exhibits high adhesive power to rubber. Thus, the composition can suitably be used in an adhesive sheet particularly suitable for application to rubber as described below, or in a layered body that includes a rubber layer and an adhesion layer. However, the applications of the composition according to the present invention are not limited thereto; for example, colored particles or the like may be incorporated into the composition, in which case the composition may be used as a coating material for imparting decoration.

### Adhesive Sheet

The adhesive sheet according to an embodiment of the present invention is an adhesive sheet having an adhesive composition layer formed using the composition.

The adhesive sheet includes at least the adhesive composition layer. The "adhesive composition layer" referred to here is a layer formed by polymerizing the component (A) and the component (B) in the composition containing the components (A) to (D). In the composition, as described above, polymerization of the component (A) and the component (B) is initiated by the action of the component (C) in the composition activated by irradiation with light. As a result thereof, the composition photo-cures to become the adhesive composition layer. The adhesive sheet, as described below, employs the adhesive composition layer of the adhesive sheet in processing to adhere to an adherend (rubber in particular), and forms the "adhesion layer" strongly adhered to the adherend by promoting the radical reaction of the component (A).

It is sufficient as long as the adhesive sheet includes at least the adhesive composition layer. The adhesive sheet may further include a support or the like, as described below. Namely, the adhesive sheet may be consisting of the adhesive composition layer alone, or may include a support and the adhesive composition layer retained on the front face of the support (and optionally another layer).

### <Adhesive Composition Layer>

The thickness of the adhesive composition layer may be selected, as appropriate, in accordance with, for example, the object to which the adhesive composition layer is to be adhered, or the required adhesive power. The thickness of the adhesive composition layer is, for example, from 20 to 1000 µm, preferably from 30 to 300 µm, and more preferably from 30 to 200 µm.

The size of the adhesive composition layer may be selected, as appropriate, in accordance with, for example, the object to which the adhesive composition layer is to be adhered, or the required adhesive power.

### <Support>

The adhesive sheet may be formed, for example, by applying a composition including the above-described components (A) to (D) to a support to form a coating film, and irradiating the coating film with light to polymerize the component (A) and the component (B) in the coating film.

Examples of the support include sheet-shaped supports, for example, release sheets such as release paper or release films.

Examples of materials that may be used in the sheet-shaped support include paper, resins, resin-coated paper, and metals.

For example, examples of resin release sheet materials include: polyester-based resins such as polyethylene terephthalate, polycyclohexylene terephthalate, and polyethylene naphthalate; polyamide-based resins such as NYLON 46, modified NYLON 6T, NYLON MXD6 and polyphthalamide; ketone-based resins such as polyphenylene sulfide and polythioether sulfone; and sulfone-based resins such as polysulfone and polyether sulfone. Other than those listed above, transparent resin substrates containing an organic resin such as polyether nitrile, polyarylate, polyether imide, polyamideimide, polycarbonate, polymethyl methacrylate, triacetyl cellulose, polystyrene, or polyvinyl chloride as a main component may also be used suitably as release sheets.

The support is not limited to the sheet-shaped supports described above, and any support may be used as long as the adhesive composition layer can be formed on a surface of the support. For example, the adhesive composition layer in the present specification may be formed on a supporting base as a support. In this matter, the thickness and the shape of the support may appropriately be designed in accordance with, for example, the shape of the adhesive composition layer to be formed.

### <Method of Producing Adhesive Sheet>

A method of producing the adhesive sheet includes an application process of applying a composition to a support to form a coating film, and an irradiation process of irradiating the coating film with light, to obtain an adhesive sheet having an adhesive composition layer resulting from the irradiating of the coating film. In other words, the adhesive sheet is produced by shaping the composition including the components (A) to (D) and polymerizing the component (A) and the component (B) in the coating film by irradiating the shaped composition (coating film) so as to form the adhesive composition layer.

The method of producing the adhesive sheet includes at least the application process and the irradiation process, and may further include processes such as a preparation process of preparing the composition and a release process of releasing the adhesive composition layer from the support.

Explanations on the respective processes are provided below.

### -Preparation Process-

The method of producing the adhesive sheet may include the preparation process. In the preparation process, for example, the components (A) to (D) are mixed to prepare a composition.

### -Application Process-

In the application process, the composition is applied to a support to form a coating film (film of the composition). Examples of a method employed for applying the composition to a surface of the support include coating methods such as a spray coating method, a dip coating method and a spin coating method. However, the method employed for applying the composition to a surface of the support is not particularly limited. The thickness, shape, size and the like of the formed coating film may be designed, as appropriate, in accordance with the thickness, shape, size and the like of the desired adhesive composition layer.

### Irradiation Process

In the irradiation process, the component (C) in the coated film is activated by irradiating light onto the coated film formed by the application process. As a result, the component (A) polymerizes with the component (B) in the coated film and the coated film is converted into the adhesive composition layer. The coated film (the film of the composition) formed on the support is imparted with shape retaining property due to the polymerization and forms the adhesive composition layer. More specifically, the irradiation process may cause the thiol groups in the component (A) to undergo a thiol-ene reaction with the terminal double bonds of the component (B) present in the coated film (the composition) such that the adhesive composition layer retains a sheet shape.

A unit for the irradiation is not particularly limited, and may be any unit that emits light of a wavelength that activates the component (C). Specific examples of the unit of irradiation include an ultrahigh pressure mercury bulb, a high pressure mercury bulb, a medium pressure mercury bulb, a low pressure mercury bulb, a xenon lamp, a metal-halide lamp, a florescent tube, a semiconductor laser, and a light emitting diode (LED).

The wavelength of light radiated in the irradiation process may be any wavelength that activates the component (C). Specifically, the wavelength of light radiated in the irradiation process may, for example, be in a range of from 300 nm to 420 nm, and more suitably from 350 nm to 400 nm.

From the perspective of suppressing generation of heat during the irradiation, the unit for irradiation preferably employs a semiconductor laser or an LED. It is thought that when the temperature of the composition rises in the irradiation process, the component (D) is activated by the heat, and due to the reduction in the amount of the component (D) contained in the obtained adhesive composition layer, it becomes difficult to obtain an adhesive sheet having a high adhesive strength to rubber. It is thought that when the unit for irradiation which suppresses generation of heat during irradiation is employed, consuming of the component (D) in the irradiation process is suppressed, thereby facilitating obtaining an adhesive sheet having a high adhesive strength to rubber.

The intensity of light radiated in the irradiation process depends on the unit for irradiation employed; however, for example, when an LED is employed, from the perspective of curability the intensity, it is preferably in a range from 100 mW/cm² to 2000 mW/cm².

Although the cumulative amount of light irradiated in the irradiation process also depends on the unit for irradiation employed and the intensity of the light, in cases in which, for example, an LED is employed and the intensity of irradiation is within the above range, the cumulative amount of light irradiated is preferably from 150 mJ/cm² to 1800 mJ/cm² from the perspectives of shape retaining property of the adhesive composition layer, achieving a high adhesive strength, or the like.

### -Release Process-

The method of producing the adhesive sheet may further include a release process of releasing the adhesive composition layer from the support. Specifically, when a sheet-shaped support is used as the support, for example, an adhesive sheet configured to include the support and the adhesive composition layer can be obtained through the application process and the irradiation process, and, an adhesive sheet formed of the adhesive composition layer released from the support can be obtained as a result of further performing the release process. When a supporting base or the like is used as the support, for example, an adhesive sheet formed of the adhesive composition layer released from the support can be obtained as a result of performing the application process and the irradiation process, and, further, the release process.

As described above, the adhesive composition layer of the adhesive sheet is able to exhibit high adhesive power to rubber. Therefore, the adhesive sheet is particularly suitable for adhesion to rubber, as described below, and can suitably be used in a layered body of a rubber layer and an adhesion layer. However, the applications of the adhesive sheet are not limited thereto, and the adhesive sheet can also be used, for example, in coating applications in which colored particles or the like are added to the composition in order to impart decoration or the like.

### [Layered Body]

The layered body according to an embodiment of the present invention includes, in the recited order, a rubber layer, an adhesion layer formed using the adhesive composition layer of the adhesive sheet described above, and another layer. In other words, the layered body is a layered body which includes plural layers adhered to one another, and in which at least one of the layers is a rubber layer, and in which the rubber layer is adhered to an adjacent layer via an adhesion layer formed using the adhesive composition layer of the adhesive sheet. With respect to the rubber layer and the another layer that are adhered via the adhesion layer, the entire adhesion face of the rubber layer and/or the entire adhesion face of the another layer may be adhered via the adhesion layer, or only a part of the adhesion face of the rubber layer and/or only a part of the adhesion face of the another layer may be adhered via the adhesion layer. The layered body may have a configuration in which three or more layers, including a rubber layer, are layered with the adhesion layer(s) according to the present invention disposed therebetween. This configuration is not limited to a configuration in which all of the layers are adhered to one another via the adhesion layer according to the present invention.

The another layer may be a rubber layer, or a layer other than a rubber layer, such as a glass layer, a metal layer or a resin layer.

The dimensions of each layer and the number of layers may be selected, as appropriate, in accordance with the purpose.

### <Rubber Layer>

The rubber layer may be formed from vulcanized rubber or unvulcanized rubber. The rubber constituting the rubber layer preferably has a carbon-carbon double bond. In this case, it is surmised that a carbon atom of a carbon-carbon double bond contained in the rubber layer contacting the adhesion layer forms a carbon-sulfur bond with a sulfur atom of a thiol group derived from the polythiol compound (A) contained in the adhesive composition layer in the adhesive sheet.

However, it is surmised that a layered body can be obtained even when the rubber constituting the rubber layer does not have a carbon-carbon double bond. In this case, it is surmised that a sulfur atom of a thiol group derived from the polythiol compound (A) and a carbon atom of a carbon-carbon bond chemically binds to each other via a hydrogen abstraction reaction in which the thiol group derived from the polythiol compound (A) pulls out hydrogen from the main chain formed by carbon-carbon bonds present in the rubber. However, from the viewpoint of improving the adhesive power, it is preferable that the rubber constituting the rubber layer has a carbon-carbon double bond.

The material of the rubber layer is not particularly limited, and examples thereof include: natural rubber (NR); conjugated diene synthetic rubbers, such as polyisoprene synthetic rubber (IR), polybutadiene rubber (BR), styrene-butadiene copolymer rubber (SBR), acrylonitrile butadiene rubber (NBR), chloroprene rubber (CR), and butyl rubber (IIR); ethylene-propylene copolymer rubber (EPM); ethylene-propylene-diene copolymer rubber (EPDM); and polysiloxane rubber. Materials for the rubber layer, such as those described above, may be used singly or in combination of two or more thereof. Among those described above, natural rubber (NR), and a combination of natural rubber and a styrene-butadiene copolymer rubber (SBR/NR), are preferable.

### <Layer other than Rubber Layer>

Examples of the layer other than the rubber layer include a metal layer, a resin layer, and a glass layer. Strong adhesion of the metal layer, the resin layer or the glass layer to the rubber layer can be achieved by using the above-described adhesive sheet.

### <Method of Producing Layered Body>

Next, a method of producing a layered body using the adhesive sheet is described. First, the adhesive composition layer of the adhesive sheet is disposed between at least one rubber layer and another layer (a rubber layer or a layer other than a rubber layer) that faces the rubber layer, thereby obtaining a stacked body (stacked body producing process).

Specifically, for example, one face of the adhesive composition layer is contacted with the adhesion face of the rubber layer, to attach the adhesive composition layer to the adhesion face of the rubber layer. Then, the adhesion face of another layer that is to face the rubber layer is contacted with the other face of the adhesive composition layer (the face not contacting the adhesion face of the rubber layer), to obtain a stacked body (i.e., a stacked body including the rubber layer, the adhesive composition layer and the another layer in this order).

When an adhesive sheet formed of the adhesive composition layer is used, the process of attaching the adhesive composition layer to the adhesion face of the rubber layer may include bringing one face of the adhesive sheet into contact with the adhesion face of the rubber layer. When an adhesive sheet including a support and the adhesive composition layer is used, a face of the adhesive composition layer of the adhesive sheet (a face not contacting with the support) may be contacted with the adhesion face of the rubber layer, the face of the adhesive composition layer being opposite to an adhesive composition layer face that contacts with the support.

When an adhesive sheet formed of the adhesive composition layer is used, the process of bringing the adhesion face of the another layer into contact with the adhesive composition layer may include bringing the adhesion face of the another layer into contact with a face of the adhesive composition layer (a face not contacting with the rubber layer), the face of the adhesive composition layer being opposite to an adhesive composition layer face contacting with the rubber layer. When an adhesive sheet including a support and the adhesive composition layer is used, the support of the adhesive sheet attached to the rubber layer may be released from the adhesive composition layer, and thereafter the adhesion face of the another layer may be contacted with an adhesive composition layer face that was in contact with the support (a face opposite to a face contacting with the rubber layer).

In the above explanation of the method employed for obtaining the stacked body, a method including bringing the another layer into contact with the adhesive composition layer after the adhesive composition layer is attached to the rubber layer is described. However, the method employed for obtaining the stacked body is not limited thereto. Specifically, when the another layer is a layer other than a rubber layer, the adhesive composition layer may be attached to the adhesion face of the another layer beforehand, and then the adhesion face of the rubber layer may be contacted with the adhesive composition layer to obtain the stacked body. Further, the adhesive composition layer may be attached to each of the rubber layer and the another layer, and then the adhesive composition layers may be contacted with each other, thereby obtaining a stacked body including the rubber layer, the first adhesive composition layer, the second adhesive composition layer and the another layer in this order.

After the stacked body is obtained, a layered body can suitably be produced by curing by way of heating (performing the adhesion treatment) while applying, if necessary, a pressing pressure to the stacked body in the thickness direction of the stacked body (heating process).

A temperature at which the thermal radical generator generates radicals efficiently may appropriately selected as the temperature for the heating, and the heating temperature is preferably a temperature that is within about ± 30°C from the temperature at which the half-life of the thermal radical generator is one minute.

In the case of applying a pressing pressure to the stacked body, the pressing pressure is preferably from 0.1 MPa to 5.0 MPa, more preferably from 0.4 MPa to 4.0 MPa, and particularly preferably from 0.5 MPa to 3.0 MPa, from the viewpoint of enhancing the adhesive power. The pressing time is preferably from 5 to 120 minutes, more preferably from 10 to 60 minutes, and particularly preferably from 15 to 45 minutes.

Explanation has been given above regarding a layered body according to an embodiment of the present invention that includes an adhesion layer formed using the adhesive composition layer of the above adhesive sheet; however, there is no limitation thereto, and a high adhesive power to rubber is obtained even when the composition is employed as-is as an adhesive.

Namely, when an adhesion layer is formed by, for example, obtaining a stacked body by coating the composition onto an adhesion face of a rubber layer or another layer, and placing the adhesion face of the rubber layer or the another layer in face-to-face contact with the coated face (adhesion face), and then curing the composition using heat, while applying pressing pressure in the thickness direction if necessary. A layered body having the rubber layer, the adhesion layer formed by employing the composition, and the another layer disposed in that order, is thereby obtained.

In cases in which the composition is employed in this manner as-is as an adhesive, it is possible to use, as the rubber layer and the other layer, a layer having a curved adhesion surface and/or a layer having a roughened adhesion surface.

### EXAMPLES

The present invention is further described below in additional detail by reference to examples. However, the present invention is not limited to the following examples.

### [Raw Materials]

The following materials were used as raw materials.

### <Polythiol Compound (A) (Component (A))>

Pentaerythritol tetrakis(3-mercaptopropionate) (PEMP): a product manufactured by SC Organic Chemical Co., Ltd.: primary thiol
Pentaerythritol tetrakis(3-mercaptobutylate) (MTPE1): a product manufactured by Showa Denko K.K.: secondary thiol

### <Compound (B) having a carbon-carbon double bond at a terminal of a molecule thereof (Component (B))>

Compound represented by Structural Formula (6): (L-Ac)
Trimethylpropane trimethacrylate (TMP): TMP (trade name) manufactured by Kyoeisha Chemical Co., Ltd.
Compound (L-AE) represented by Structural Formula (5) illustrated above
Compound (L-MAc) represented by Structural Formula (7) illustrated above
Compound (Z-Ac) represented by Structural Formula (3) illustrated above
Compound (D-Ac) represented by Structural Formula (9) illustrated above
Compound (D-MAc) represented by Structural Formula (10) illustrated above

### <Photoradical Generator (C) (Component (C))>

Diphenyl(2,4,6-trimethylbenzoyl)phosphine oxide: LUCIRIN TPO (tradename) manufactured by BASF

### <Thermal Radical Generator (D) (Component (D))>

t-butyl peroxy-2-ethylhexanoate: PERBUTYL O (tradename) manufactured by NOF CORPORATION

### <Surface Controller (E) (Component (E))>

Silicone acrylate-based surface controller: SIU2400 (tradename) manufactured by Toyo Chemicals Co., Ltd.

### [Measurement of Total Molar Number (SH) of Thiol Groups]

The total molar number (SH) of thiol groups contained in the polythiol compound (A) was calculated by dividing the addition amount by the theoretical molecular weight, and multiplying the obtained value by the number of thiol groups contained in one molecule of the polythiol compound (A).

### [Measurement of Total Molar Number (Ene) of Carbon-carbon double bond]

The total molar number (Ene) of carbon-carbon double bond in terminals of a molecule of the compound (B) having a carbon-carbon double bond at a terminal of a molecule thereof was obtained by dividing the addition amount mentioned above by the theoretical molecular weight, and multiplying the obtained value by the number of carbon-carbon double bond contained in one molecule of the compound (B) having a carbon-carbon double bond at a terminal of a molecule thereof.

### [Production of Rubber]

Rubber (having a length of 100 mm, a width of 25 mm, and a thickness of 3 mm) was produced from the formulation indicated in the following Table 1.

**Table 1**

| | | Type of Rubber | |
|---|---|---|---|
| | | NR/SBR | NR |
| Formulation | NR | 15 | 100 |
| | SBR | 85 | - |
| | Carbon Black | 50 | 50 |
| | Stearic Acid | 2 | 2 |
| | Anti-aging Agent | 1 | 1 |
| | Zinc Oxide | 3 | 3 |
| | Vulcanization Accelerator 1 | 0.4 | 0.4 |
| | Vulcanization Accelerator 2 | 0.2 | 0.2 |
| | Sulfur | 1.4 | 1.4 |

| | | | |
|---|---|---|---|
| *Numbers in the table indicate parts by mass | | | |

The specifics of the individual components noted in Table 1 are as follows.
- Natural Rubber (NR):: RSS#3
- Styrene-butadiene Copolymer Rubber (SBR):: JSR1500 (tradename) manufactured by JSR CORPORATION
- Anti-aging Agent:: N-phenyl-N'-(1,3-dimethylbutyl)-p-phenylenediamine (NOCRAC 6C (tradename) manufactured by OUCHI SHINKO CHEMICAL INDUSTRIAL CO., LTD.)
- Vulcanization Accelerator 1:: 1,3-diphenylguanidine (NOCCELER D (D-P) (tradename) manufactured by OUCHI SHINKO CHEMICAL INDUSTRIAL CO., LTD.)
- Vulcanization Accelerator 2:: di-2-benzothiazolyl disulfide (NOCCELER DM-P (DM) (tradename) manufactured by OUCHI SHINKO CHEMICAL INDUSTRIAL CO., LTD.)

### [Examples and Comparative Examples]

In Examples 1 to 13 and Comparative Examples 1 to 2, in which the NR/SBR was used as rubber, the relationship between the adhesive power and the ratio (Ene/SH) of the total molar number of carbon-carbon double bond contained in terminals of a molecule of the compound (B) having a carbon-carbon double bond at a terminal of a molecule thereof to be added to the total molar number of thiol groups contained in the polythiol compound (A) to be added was studied by changing the ratio (Ene/SH).

The Examples and Comparative Examples are specifically described below.

Specifically, first, the composition formed by blending each of the components (A) to (E), and optionally a solvent medium (solvent), according to Table 2 and Table 3 below (in which the numerical values of each component indicate the content (% by mass) of non-volatile components) was coated onto a release sheet so as to form a coated film. Then, light was irradiated onto the coated film using light emitting diodes (UV-LEDs, an LED-UV irradiation head (water cooled) manufactured by Sentech, with a light intensity of 1200 mW/cm²) so as to achieve a cumulative amount of light of 800 mJ/cm², thereby obtaining an adhesive sheet with an adhesive composition layer having a thickness of 100 µm. MEK or butyl acetate was employed as the solvent medium (solvent) so as to maintain both compatibility and solubility. NR/SBR was employed as the rubber.

The adhesive composition layer of the obtained adhesive sheet was sandwiched between two rubber sheets (rubber substrates) to form a stacked body, and the stacked body was heated to form a layered body. The heating was performed by maintaining the stacked body at a temperature of 150°C while applying a pressing pressure of 2.5 MPa for 20 minutes. Then, the adhesive power of the adhesion layer formed using the adhesive composition layer as described above was measured. The results thereof are indicated in Tables 2 and 3.

### [Method Employed for Measurement of Adhesion Power of Cured Body of Adhesive (Adhesion Layer)]

The opposite ends of the adjacent rubber substrates in the layered body were pulled away from each other (in the directions normal to the principal face of the rubber sheet, the directions forming an angle of 180°) under a tension rate of 50 mm/min., and the delamination strength (N/25mm) was measured and used as an indicator of the adhesive power.

With respect to the adhesive power shown in the evaluation results, a delamination strength of 100N/25mm or greater indicates that a sufficient adhesive power at a level at which the rubber substrate breaks before delamination occurs is obtained. The delamination strength is preferably 300N/25mm or greater. In contrast, when the adhesive power (the delamination strength) is less than 100N/25mm, the reaction at the interface between the rubber substrate and the adhesive does not proceed sufficiently, and delamination occurs at the interface or the adhesive itself undergoes cohesive failure due to insufficient cohesive force of the adhesive. Occurrence of such a phenomenon indicates that the adhesive power is insufficient.

### Method of Testing Delamination strength at High Temperature for Adhesion layer

The layered body was placed in a chamber set at each of the temperatures and left for 30 minutes, and then a T-peel test was manually performed thereon. The temperature was raised in steps of 5°C from 40°C as the test was performed, and the temperature at which delamination occurred was evaluated. The evaluation criteria are as stated below, and the results are illustrated in Table 2 and Table 3.

### - Evaluation Criteria -

- G1:: Delamination occurred at 100°C or higher
- G2:: Delaminatio occurred at 70°C or higher, but lower than 100°C.
- G3:: Delaminatio occurred at 55°C or higher, but lower than 70°C.
- G4:: Delaminatio occurred at 40°C or higher, but lower than 55°C.

### <Examples 14 to 15> (in which NR was used as rubber)

Ingredients were mixed according to the formulation indicated in the following Table 3 (the number for each ingredient indicating the parts by mass of non-volatile portion), to obtain a composition, and an adhesive sheet was prepared from the obtained composition.

The obtained adhesive was cured in the same manner as described above, and the adhesive power of the adhesion layer in the layered body was measured in the same manner as described above. The NR was used as the rubber. The results thereof (the evaluation results) are indicated in Table 3.

Examples 1 to 9 are provided herewith for reference only.

**Table 2**

| Composition | Formulation | | | | | | | | | | | | Ene /SH | Comp. (C) /Thiol Groups | Comp. (D) /Thiol Groups | Evaluation | |
|---|---|---|---|---|---|---|---|---|---|---|---|---|---|---|---|---|---|
| | Component (A) | | Component (B) | | | | | | | Comp. (D) | Comp. (E) | Comp. (C) | | | | | |
| | PEMP | MTPE 1 | L-Ac | TMP | L-AE | L-MAc | Z-Ac | D-Ac | D-MAc | PERBUTYL O | SIU 2400 | TPO | | | | Adhesive Power | Delamination at high temperature |
| | (% by mass) | (% by mass) | (% by mass) | (% by mass) | (% by mass) | (% by mass) | (% by mass) | (% by mass) | (% by mass) | (% by mass) | (% by mass) | (% by mass) | (Molar Ratio) | (Molar Ratio) | (Molar Ratio) | N/ 25mm | |
| Comp. Ex. 1 | 46.46 | - | 27.24 | - | - | - | - | - | - | 24.67 | 0.93 | 0.70 | 0.20 | 0.005 | 0.3 | 6 | G4 |
| Comp. Ex. 2 | 25.57 | - | 59.96 | - | - | - | - | - | - | 13.58 | 0.51 | 0.38 | 0.80 | 0.005 | 0.3 | 21 | G4 |
| Example 1 | 40.89 | - | 35.96 | - | - | - | - | - | - | 21.72 | 0.82 | 0.61 | 0.30 | 0.005 | 0.3 | 496 | G2 |
| Example 2 | 36.51 | - | 42.82 | - | - | - | - | - | - | 19.39 | 0.73 | 0.55 | 0.40 | 0.005 | 0.3 | 665 | G2 |
| Example 3 | - | 38.97 | 41.07 | - | - | - | - | - | - | 18.60 | 0.78 | 0.58 | 0.40 | 0.005 | 0.3 | 360 | G2 |
| Example 4 | 30.08 | - | 52.90 | - | - | - | - | - | - | 15.97 | 0.60 | 0.45 | 0.60 | 0.005 | 0.3 | 264 | G2 |
| Example 5 | 27.64 | - | 56.72 | - | - | - | - | - | - | 14.68 | 0.55 | 0.41 | 0.70 | 0.005 | 0.3 | 155 | G2 |
| Example 6 | 49.64 | - | - | 18.31 | - | - | - | - | - | 26.35 | 4.96 | 0.74 | 0.40 | 0.005 | 0.3 | 214 | G4 |
| Example 7 | 39.23 | - | - | - | 38.56 | - | - | - | - | 20.84 | 0.78 | 0.59 | 0.40 | 0.005 | 0.3 | 572 | G3 |

**Table 3**

| Composition | Formulation | | | | | | | | | | | | Ene/SH | Comp. (C) /Thiol Groups | Comp. (D) /Thiol Groups | Evaluation | |
|---|---|---|---|---|---|---|---|---|---|---|---|---|---|---|---|---|---|
| | Component (A) | | Component (B) | | | | | | | Comp. (D) | Comp. (E) | Comp. (C) | | | | | |
| | PEMP | MTPE 1 | L-Ac | TMP | L-AE | L-MAc | Z-Ac | D-Ac | D-MAc | PERBUTYLO | SIU 2400 | TPO | | | | Adhesive Power | Delamination at high temperature |
| | (% by mass) | (% by mass) | (% by mass) | (% by mass) | (% by mass) | (% by mass) | (% by mass) | (% by mass) | (% by mass) | (% by mass) | (% by mass) | (% by mass) | (Molar Ratio) | (Molar Ratio) | (Molar Ratio) | N/ 25mm | |
| Example 8 | 35.91 | - | - | - | - | 43.76 | - | - | - | 19.07 | 0.72 | 0.54 | 0.40 | 0.005 | 0.3 | 459 | G2 |
| Example 9 | 30.17 | - | - | - | - | - | 52.75 | - | - | 16.03 | 0.60 | 0.45 | 0.60 | 0.005 | 0.3 | 354 | G3 |
| Example 10 | 38.20 | - | - | - | - | - | - | 37.13 | - | 20.28 | 3.82 | 0.57 | 0.30 | 0.005 | 0.3 | 415 | G2 |
| Example 11 | 37.70 | - | - | - | - | - | - | - | 37.95 | 20.02 | 3.77 | 0.56 | 0.30 | 0.005 | 0.3 | 557 | G1 |
| Example 12 | 33.46 | - | - | - | - | - | - | - | 44.92 | 17.77 | 3.35 | 0.50 | 0.40 | 0.005 | 0.3 | 540 | G1 |
| Example 13 | 30.08 | - | - | - | - | - | - | - | 50.48 | 15.98 | 3.01 | 0.45 | 0.50 | 0.005 | 0.3 | 520 | G1 |
| Example 14 | 37.70 | - | - | - | - | - | - | - | 37.95 | 20.02 | 3.77 | 0.56 | 0.30 | 0.005 | 0.3 | 355 | G1 |
| Example 15 | 33.46 | - | - | - | - | - | - | - | 44.92 | 17.77 | 3.35 | 0.50 | 0.40 | 0.005 | 0.3 | 212 | G1 |

### [Evaluation]

As indicated in the tables above, the adhesive power in Examples 1 to 15 was high due to the inclusion of the components (A) to (D), and the ratio (Ene/SH) of the total molar number of carbon-carbon double bond contained in terminals of a molecule of the component (B) to the total molar number of thiol groups contained in the component (A) being higher than 0.20 but equal to or less than 0.70.

In contrast, the adhesive power in Comparative Examples 1 and 2 was low as a result of the ratio (Ene/SH) being outside the range defined in the present invention.

## Claims

1. A composition comprising:
a polythiol compound;
a compound having a carbon-carbon double bond at a terminal of a molecule thereof;
a photo radical generator; and
a thermal radical generator,
a ratio (Ene/SH) of a total molar number (Ene) of the carbon-carbon double bond contained in terminals of a molecule of the compound having a carbon-carbon double bond at a terminal of a molecule thereof to a total molar number (SH) of thiol groups contained in the polythiol compound being higher than 0.20 but equal to or less than 0.70, and
wherein the compound having a carbon-carbon double bond at a terminal of a molecule thereof is a compound represented by the following Formula (1): 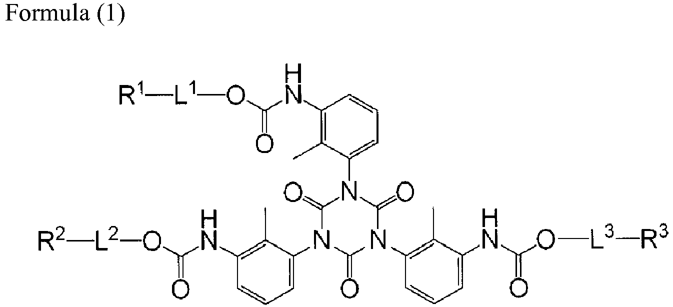
wherein R¹, R², and R³ each independently represent an acryloyloxy group or a methacryloyloxy group, in which at least one of R¹ to R³ is a methacryloyloxy group; and L¹, L², and L³ each independently represent an alkylene group having from 1 to 4 carbons.

2. The composition according to claim 1, wherein the thermal radical generator is a peroxide.

3. The composition according to claim 1 or claim 2, wherein the polythiol compound is a primary thiol.

4. The composition according to any one of claims 1 to 3, wherein the polythiol compound has a molecular weight of from 200 to 3000.

5. The composition according to any one of claims 1 to 4, wherein the polythiol compound is selected from the group consisting of: a polythiol in which a portion other than the thiol groups is an aliphatic hydrocarbon; a polythiol obtainable by replacing halogen atoms of a halohydrin adduct of an alcohol with thiol groups; a polythiol that is a hydrogen sulfide reaction product of a polyepoxide compound; a thioglycolic acid ester obtainable by an ester-forming reaction between a polyhydric alcohol having from 2 to 6 hydroxyl groups in a molecule thereof and thioglycolic acid; a mercapto fatty acid ester obtainable by an ester-forming reaction between a polyhydric alcohol having from 2 to 6 hydroxyl groups in a molecule thereof and a mercapto fatty acid; a thiol isocyanurate compound obtainable by a reaction between an isocyanurate compound and a thiol; a thiol that includes a polysulfide group; a silicone modified with thiol groups; and silsesquioxane modified with thiol groups.

6. The composition according to any one of claims 1 to 5, further comprising a surface controller.

7. A method of producing an adhesive sheet, the method comprising:
applying the composition according to any one of claims 1 to 6 to a support to form a coating film; and
irradiating the coating film with light, to obtain an adhesive sheet having an adhesive composition layer resulting from the irradiating of the coating film.

8. An adhesive sheet comprising an adhesive composition layer formed by using the composition according to any one of claims 1 to 6.

9. A method of producing a layered body, the method comprising:
forming a stacked body comprising, in this order, a rubber layer, the adhesive composition layer in the adhesive sheet according to claim 8, and another layer; and
heating the stacked body, to obtain a layered body comprising, in this order, the rubber layer, an adhesion layer resulting from the heating of the adhesive composition layer, and the another layer.

10. A layered body comprising, in this order, a rubber layer, an adhesion layer formed using the adhesive composition layer of the adhesive sheet according to claim 8, and another layer.

## Patentansprüche

1. Zusammensetzung umfassend:
eine Polythiolverbindung;
eine Verbindung, die eine Kohlenstoff-Kohlenstoff-Doppelbindung an einem Terminal eines Moleküls davon aufweist;
einen Fotoradikalerzeuger; und
einen thermischen Radikalerzeuger,
wobei ein Verhältnis (Ene/SH) einer gesamten Molzahl (Ene) der Kohlenstoff-Kohlenstoff-Doppelbindung, die in Terminalen eines Moleküls der Verbindung enthalten ist, die eine Kohlenstoff-Kohlenstoff-Doppelbindung an einem Terminal eines Moleküls davon aufweist, zu einer gesamten Molzahl (SH) von Thiolgruppen, die in der Polythiolverbindung enthalten sind, höher als 0,20, jedoch gleich oder geringer als 0,70 ist und
wobei die Verbindung, die eine Kohlenstoff-Kohlenstoff-Doppelbindung an einem Terminal eines Moleküls davon aufweist, eine Verbindung ist, die durch die folgende Formel (1) dargestellt ist, ist: 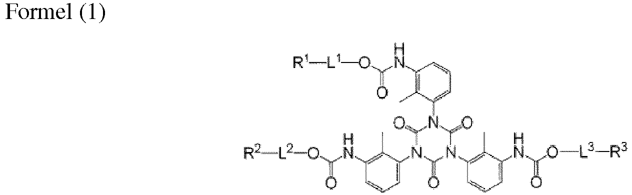
wobei R¹, R² und R³ jeweils unabhängig eine Acryloyloxygruppe oder eine Methacryloyloxygruppe darstellen, wobei mindestens eines von R¹ bis R³ eine Methacryloyloxygruppe ist; und L¹, L² und L³ jeweils unabhängig eine Alkylengruppe darstellen, die 1 bis 4 Kohlenstoffe aufweist.

2. Zusammensetzung nach Anspruch 1, wobei der thermische Radikalerzeuger ein Peroxid ist.

3. Zusammensetzung nach Anspruch 1 oder Anspruch 2, wobei die Polythiolverbindung ein primäres Thiol ist.

4. Zusammensetzung nach irgendeinem der Ansprüche 1 bis 3, wobei die Polythiolverbindung ein Molekulargewicht von 200 bis 3000 aufweist.

5. Zusammensetzung nach irgendeinem der Ansprüche 1 bis 4, wobei die Polythiolverbindung aus der Gruppe ausgewählt wird bestehend aus: einem Polythiol, wobei ein Teil, bei dem es sich nicht um die Thiolgruppen handelt, ein aliphatischer Kohlenwasserstoff ist; einem Polythiol, das durch Ersetzen von Halogenatomen eines Halohydrinaddukts eines Alkohols mit Thiolgruppen erhältlich ist; einem Polythiol, das ein Wasserstoffsulfidreaktionsprodukt einer Polyepoxidverbindung ist; einem Thioglycolsäureester, der durch eine Esterbildungsreaktion zwischen einem mehrwertigen Alkohol, der 2 bis 6 Hydroxylgruppen in einem Molekül davon aufweist, und Thioglycolsäure erhältlich ist; einem Mercaptofettsäureester, der durch eine Esterbildungsreaktion zwischen einem mehrwertigen Alkohol, der 2 bis 6 Hydroxylgruppen in einem Molekül davon aufweist, und einer Mercaptofettsäure erhältlich ist; einer Thiolisocyanuratverbindung, die durch eine Reaktion zwischen einer Isocyanuratverbindung und einem Thiol erhältlich ist; einem Thiol, das eine Polysufidgruppe umfasst; einem mit Thiolgruppen modifizierten Silicon und Silsesquioxan, das mit Thiolgruppen modifiziert ist.

6. Zusammensetzung nach irgendeinem der Ansprüche 1 bis 5, ferner einen Oberflächenregler umfassend.

7. Verfahren zur Herstellung einer Klebstoffplatte, wobei das Verfahren Folgendes umfasst:
Auftragen der Zusammensetzung nach irgendeinem der Ansprüche 1 bis 6 auf einen Träger, um einen Beschichtungsfilm zu bilden; und
Bestrahlen des Beschichtungsfilms mit Licht, um eine Klebstoffplatte zu erhalten, die eine Klebstoffzusammensetzungsschicht aufweist, die aus der Bestrahlung des Beschichtungsfilms resultiert.

8. Klebstoffplatte umfassend eine Klebstoffzusammensetzungsschicht, die unter Verwendung der Zusammensetzung nach irgendeinem der Ansprüche 1 bis 6 gebildet wird.

9. Verfahren für die Herstellung eines schichtförmigen Körpers, wobei das Verfahren Folgendes umfasst:
Bilden eines gestapelten Körpers umfassend, in dieser Reihenfolge, eine Kautschukschicht, eine Klebstoffzusammensetzungsschicht in der Klebstoffplatte Anspruch 8 entsprechend und eine andere Schicht; und
Erhitzen des gestapelten Körpers, um einen schichtförmigen Körper zu erhalten, der, in dieser Reihenfolge, die Kautschukschicht, eine Adhäsionsschicht, die aus dem Erhitzen der Klebstoffzusammensetzungsschicht resultiert, und die andere Schicht umfasst.

10. Schichtförmiger Körper umfassend, in dieser Reihenfolge, eine Kautschukschicht, eine Adhäsionsschicht, die unter Anwendung der Klebstoffzusammensetzungsschicht der Klebstoffplatte nach Anspruch 8 gebildet wird, und eine andere Schicht.

## Revendications

1. Composition comprenant:
un composé polythiol;
un composé ayant une double liaison carbone-carbone à une terminaison de sa molécule;
un générateur photoradicalaire; et
un générateur thermoradicalaire,
un rapport (Ene/SH) d'un nombre molaire total (Ene) de la double liaison carbone-carbone contenue dans les terminaisons d'une molécule du composé ayant une double liaison carbone-carbone à une terminaison de sa molécule à un nombre molaire total (SH) des groupes thiol contenus dans le composé polythiol étant supérieur à 0,20 mais inférieur ou égal à 0,70, et
le composé ayant une double liaison carbone-carbone à une terminaison de sa molécule est un composé représenté par la Formule suivante (1): 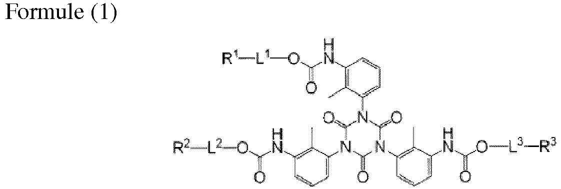
où R¹, R², et R³ représentent chacun indépendamment un groupe acryloyloxy ou un groupe méthacryloyloxy, dans lequel au moins l'un de R¹ à R³ est un groupe méthacryloyloxy; et L¹, L², et L³ représentent chacun indépendamment un groupe alcylène ayant de 1 à 4 atomes de carbone.

2. Composition selon la revendication 1, le générateur thermoradicalaire étant le peroxyde.

3. Composition selon la revendication 1 ou la revendication 2, le composé polythiol étant un thiol primaire.

4. Composition selon l'une quelconque des revendications 1 à 3, le composé polythiol ayant un poids moléculaire de 200 à 3 000.

5. Composition selon l'une quelconque des revendications 1 à 4, le composé polythiol étant sélectionné dans le groupe constitué: d'un polythiol dans lequel une portion autre que les groupes thiol est un hydrocarbure aliphatique; un polythiol pouvant être obtenu par remplacement des atomes d'halogène d'un produit d'addition halohydrine d'un alcool avec des groupes thiol; un polythiol qui est un produit réactionnel sulfure d'hydrogène d'un composé polyépoxyde; un ester d'acide thioglycolique pouvant être obtenu par réaction de formation d'ester entre un poly(alcool hydrique) ayant de 2 à 6 groupes hydroxyle dans sa molécule et un acide thioglycolique; un ester d'acide mercapto gras pouvant être obtenu par une réaction de formation d'ester entre un poly(alcool hydrique) ayant de 2 à 6 groupes hydroxyle dans sa molécule et un acide mercapto gras; un composé thiol isocyanurate pouvant être obtenu par une réaction entre un composé isocyanurate et un thiol; un thiol qui comprend un groupe polysulfure; une silicone modifiée avec des groupes thiol; et un silsesquioxane modifié avec des groupes thiol.

6. Composition selon l'une quelconque des revendications 1 à 5, comprenant en outre un agent de régulation de surface.

7. Procédé de production d'une feuille adhésive, le procédé comprenant:
l'application de la composition selon l'une quelconque des revendications 1 à 6 à un support pour former un film de revêtement; et
l'exposition au rayonnement du film de revêtement avec de la lumière, pour obtenir une feuille adhésive ayant une couche de composition adhésive résultant de l'exposition au rayonnement du film de revêtement.

8. Feuille adhésive comprenant une couche de composition adhésive formée en utilisant la composition selon l'une quelconque des revendications 1 à 6.

9. Procédé de production d'un corps stratifié, le procédé comprenant:
la formation d'un corps empilé comprenant, dans cet ordre, une couche de caoutchouc, la couche de composition adhésive dans la feuille adhésive selon la revendication 8, et une autre couche; et
le chauffage du corps empilé, pour obtenir un corps stratifié comprenant, dans cet ordre, la couche de caoutchouc, une couche d'adhésion résultant du chauffage de la couche de composition adhésive, et l'autre couche.

10. Corps stratifié comprenant, dans cet ordre, une couche de caoutchouc, une couche d'adhésion formée en utilisant la couche de composition adhésive de la feuille adhésive selon la revendication 8, et une autre couche.
